# EUROPEAN PATENT SPECIFICATION

(11) **EP 2 685 056 B1**
(45) Date of publication and mention of the grant of the patent: **06.01.2016**
(21) Application number: 12175874.2
(22) Date of filing: 11.07.2012
(51) Int. Cl.: F01N 3/023, F01N 9/00, F01N 3/32, F01N 3/30

(54) **Soot burning method for particulate filters**
Verfahren zur Russverbrennung für Partikelfilter
Procédé de combustion de suie pour filtres à particules

(43) Date of publication of application: 15.01.2014
(73) Proprietor: Ford Global Technologies, LLC, Dearborn, MI 48126 (US)
(72) Inventor: Ukropec, Robert, 52072 Aachen (DE); Dubkov, Alexei, 52072 Aachen (DE); Boerensen, Christoph, 4731 Raeren (BE); Riesmeier, Elmar, 52066 Aachen (DE); Balenovic, Mario, 5582 AV Waalre (NL); Carberry, Brendan, 52074 Aachen (DE)
(74) Representative: Drömer, Hans-Carsten

(56) References cited:
- EP-A1- 0 632 188
- DE-A1-102004 046 638
- JP-A- 7 317 530
- JP-A- H07 150 930

## Description

The present invention relates to a method of burning soot in an exhaust particulate filter of a combustion engine to regenerate the particulate filter and to a vehicle, adapted to perform this method.

It is known to use a diesel particulate filter (DPF) or a catalytic diesel particulate filter (CDPF) to trap soot particulates in diesel exhaust gas. US 7,980,061 B2 discloses an engine system including an engine, an intake fluid system, and an exhaust fluid system. Furthermore, the engine system includes a turbocharger device including a compressor member in operative communication with the intake fluid stream and an energy supply member in operative communication with the exhaust stream to be actuated thereby. The energy supply member transfers energy to the compressor member, and the compressor member supplies a compressed fluid stream to the engine. Moreover, the engine system includes an aftertreatment device in operative communication with the exhaust stream to treat the exhaust stream. The engine system additionally includes a bypass fluid system that bypasses the internal combustion engine. The bypass fluid system supplies a portion of the compressed fluid stream to the aftertreatment device.

US 7,992,381 B2 describes a method for regeneration of a CDPF disposed in the exhaust stream of a diesel engine. The method includes a first phase and a second phase following the first phase. As the first phase ends, as indicated by a temperature sensor at the exit end of the CDPF, the temperature and oxygen content of the exhaust gas are increased at the entrance to the CDPF in an ensuing second stage. These increases cause oxidation of the soot remaining near the entrance and the sides of the CDPF, resulting in a cleaner and higher-capacity CDPF than is produced by a single-phase regeneration. The sequential stages are implemented via an algorithm programmed into an Engine Control Module (ECM).

US 8,037,675 B2 discloses a PM (particulate matter) catalyst regeneration control for the purpose of "soot removal" is performed prior to a sulphur poisoning recovery control. In the PM catalyst regeneration control, PM deposits in a catalyst are burned. A target throttle opening degree for the sulphur poisoning recovery control is preset smaller than a target throttle opening for the PM catalyst regeneration control in order to reduce the intake air volume during deceleration. A catalyst bed temperature is thus prevented from dropping, and therefore maintained at a level appropriate to sulphur poisoning recovery. A controlling of the intake air volume during deceleration in such a manner could results in more efficient catalyst recovery from sulphur poisoning, so that the fuel economy is maintained during the sulphur poisoning recovery control.

The aforementioned embodiments of the state of the art are designed only for a regeneration of filters of diesel combustion engines.

DE 102004046638 A1 describes a method for operating particle filter in exhaust of an internal combustion engine. The method involves blowing a secondary air stream into the exhaust area upstream of the particle filter. The secondary air stream is influenced in dependence on the detected measurement for the particle burn-off speed. The secondary air stream can be produced by a secondary air pump.

JP 7317530 (A) provides an exhaust emission control device for a diesel engine, which can control the secondary air amount for putting the filter temperature in a certain desired range. For this, a filter to collect particulates is provided in the exhaust pipe of the diesel engine. An electric heater is installed in the secondary air upstream part about the filter, and a temperature sensor is furnished at the end of the secondary air upstream part within the filter. An engine control unit calculates the particulate collecting amount from the temperature of exhaust gas and the engine speed. When the collecting amount exceeds the specified value, the control unit ignites the particulates collected by the filter and starts the supply of the secondary air so that the burn-out of the collected particulates is started, and controls the secondary air amount thereafter on the basis of the temperature of the filter upstream given by the temperature sensor at the time of the filter regeneration.

EP 632188 A1 discloses an exhaust emission control device for a diesel engine, which has a filter disposed in an exhaust gas passage for collecting particulates contained in exhaust gas. An electric heater and an electric motor accommodated in an air pump are connected to and actuated by a battery. When the filter collects a predetermined amount or more of the particulates, the heater and pump are actuated to burn the particulates to regenerate the filter. The heater and motor are driven by an electric duty signal based on the difference between a value of actual power, supplied to the heater and motor before burning the particulates, and a predetermined target power value for burning the particulates. A detecting device detecting the actual power value is electrically connected to both ends of the heater and motor and battery.

It is an objective of the present invention to provide an advantageous method of maximal soot load control and safe regeneration of the particulate filter. It is a further objective to provide an advantageous vehicle.

The first objective is achieved by a method of burning soot in an exhaust particulate filter as claimed in claim 1. The second objective is achieved by a vehicle as claimed in claim 10. The depending claims contain further developments of the invention.

According to the invention, a method of burning soot in an exhaust particulate filter of a combustion engine is provided, in which at least the temperature of the exhaust gas is monitored and in which burning of soot is initiated by introducing additional oxygen into the exhaust gas upstream of the particulate filter when the temperature of the exhaust gas exceeds a given level wherein a soot burn rate is controlled by the amount of additional oxygen that is introduced into the exhaust gas, wherein the additional oxygen is introduced into the exhaust gas in pulses of controlled frequency and/or controlled length.

In this way, a method is provided which can be advantageously used for aftertreatment of diesel and also of gasoline combustion engines. In conjunction with the on-board diagnostic system, the method according to the present invention keeps the optimal operating filter conditions in a safe range. By using an introduction via pulses the soot burning process can be controlled more precisely.

It will also help to avoid extreme conditions like a high soot load or extremely high temperatures during soot combustion. Hence, in an exemplary embodiment of the present invention, it is intended that the temperature of the particulate filter is retained in a range above 250 °C and below 900 °C, more specifically in a range between 400 °C to 800 °C. Thus, the lifetime of the particulate filter can be increased.

The method according to the present invention offers a useful way of keeping soot load of the particulate filter at a low level and protecting the filter from conditions which will lead to its degeneration.

According to the invention, the additional oxygen is taken from an air inlet of the combustion engine and led to the exhaust gas upstream of the particulate filter by means of a bypass. Particularly, it is intended that the amount of additional oxygen that is introduced into the exhaust gas is set by means of a valve located in the bypass. Thus, fresh air of the environment can easily be used as oxygen rich gas.

In a further exemplary embodiment of the present invention, it is intended that the amount of additional oxygen that is introduced into the exhaust gas is controlled by an engine control unit of the combustion engine. Thus, no additional parts are required and no additional costs are incurred.

In a further exemplary embodiment of the present invention, it is intended that the additional oxygen is compressed before it is introduced into the exhaust gas. Accordingly, the flow rate of the additional oxygen can be increased easily.

Furthermore, a vehicle including a combustion engine and an aftertreatment system comprising a particulate filter is provided which is adapted to perform the method according to the inventive method. In this way, a vehicle especially a car is provided which will benefit from the advantages of the inventive method.

The drawings described herein are for illustration purposes only and are not intended to limit the scope of the present disclosure in any way. The figures are showing:
Fig. 1 is a schematic diagram of a regeneration system for particulate filters;
Fig. 2 is a schematic diagram of a method according to the present invention;
Fig. 3 is a diagram of soot oxidation rate vs. soot conversion at different temperatures;
Fig. 4 is a diagram of soot oxidation rates vs. soot conversion for FW2 (commercial soot), diesel soot and gasoline soot; and
Fig. 5 is a diagram of soot oxidation rates vs. O₂ concentration at a Temperature of 460 °C and at 50 % soot conversion.

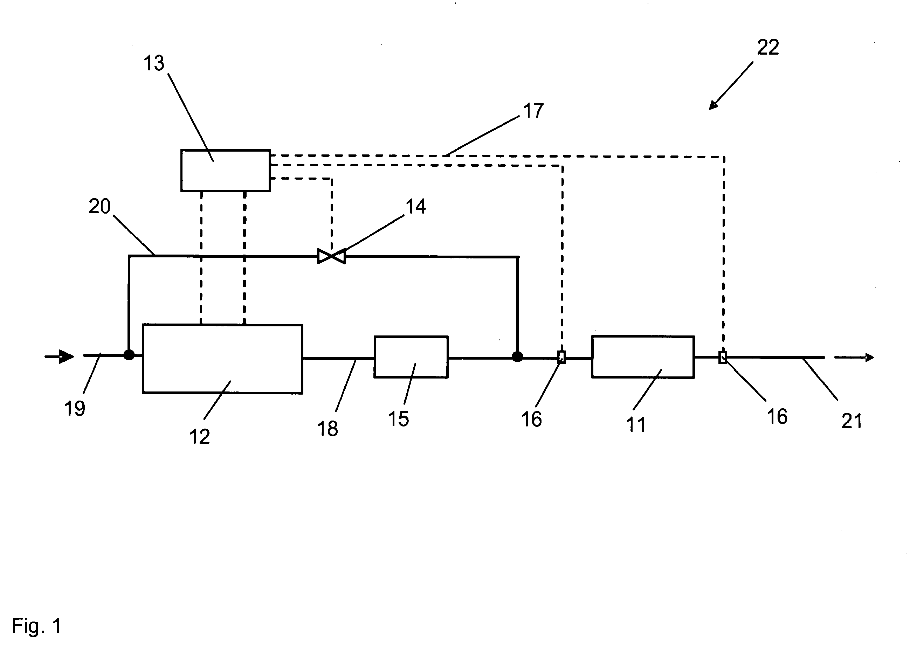

Referring to Fig. 1, a typical regeneration system 22 for particulate filters is shown. A particulate filter 11 is accommodated in an aftertreatment system of a combustion engine 12. Downstream of the engine 12 in the exhaust gas line 18 a catalytic converter 15 is arranged. A control unit 13 is connected to the engine 12 via communication lines 17 and to sensors 16 at least upstream of and downstream of the particulate filter 11. The control unit 13 is also connected to a valve 14. By means of the valve 14 the supply of oxygen containing gas to the particulate filter 11 can be controlled. Preferably, the oxygen containing gas is fresh air. For this reason a supply air line 20 designed as a bypass may be provided.

Fresh air enters the regeneration system 22 through an inlet 19. The fresh air is supplied to the combustion engine 12 and to the bypass. The exhaust gases emitted by the combustion engine 12 are treated firstly in the catalytic converter 15 and subsequently in the particulate filter 11. The exhaust gases leave the system 22 through the outlet 21.

The supply air line 20 as a bypass supplies a part of the fresh air directly to the intake of the particulate filter 11. The valve 14 is arranged in the bypass. Depending on the setting of the valve 14, the oxygen containing gas is streaming or not. The valve 14 is controlled by the control unit 13.

The filter 11 collects particulate matter from the exhaust gases. After a certain time, the particulate filter 11 has to be regenerated. The soot inside the filter 11 has to be converted into carbon dioxide. In order to meet specific requirements a predefined temperature and a predefined oxygen level have to be achieved. The object of the present invention is to provide for such conditions.

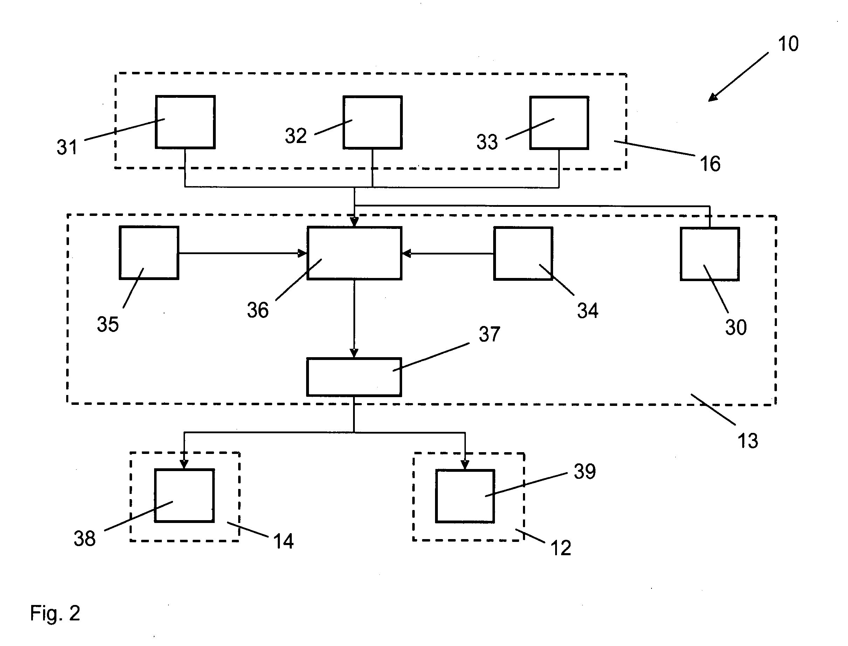

Referring to Fig. 2, a schematic diagram of a method 10 according to the present invention is shown. The method 10 concerns the regeneration of the particulate filter 11 by introducing oxygen rich gas at an appropriate temperature to the exhaust gas upstream of the particulate filter 11. The regeneration method 10 is actively used at temperatures above 250 °C, particularly above 400 °C, and when the exhaust gas comprises a low level of oxygen. Controlled introduction of oxygen containing gas is used to control the amount of soot load and soot combustion and protecting the particulate filter 11 against reaching high temperatures.

The steps of the method 10 according the present invention are illustrated. The regeneration method 10 includes at least a step of monitoring the exhaust gas temperature 31. Additionally, the method 10 according to the present invention may also include a step of monitoring the oxygen level of the exhaust gas 32 and a step of monitoring the temperature of the filter 33. These three steps 31, 32 and 33 are performed by the sensors 16. In an exemplary embodiment of the present invention the engine speed and the mass flow of the exhaust gas are monitored by the sensors 16. Based on the known soot burn rate 35 at a respective temperature of the exhaust gas, the known oxygen concentration 30 of the inlet gas and a predicted amount of the soot load 34, an additionally required amount 36 of oxygen containing gas is determined. The determination is performed by the control unit 13. Depending on the identified needs of oxygen, the control unit initiates a soot burn 37 by either opening 38 the valve 14 and/or regulating 39 the operation of the engine 12.

When the exhaust gas temperature reaches or exceeds a certain level, for instance 400 °C, the additional oxygen may be introduced into the exhaust gas in pulses, initialling the soot burn. The frequencies of the pulses as well as the length of the pulses are controlled in accordance with the desired soot burn rate. In case the temperature inside the particulate filter 11 exceeds an upper limit, for instance 900 °C, the supply of oxygen containing gas is terminated. For protecting the particulate filter 11 against degeneration due to very high temperatures the supply of oxygen containing gas may be shut down, or a fuel cut may be avoided, or a rich mixture during the time when temperatures are very high may be created.

In a preferred embodiment of the present invention the temperature of the particulate Filter 11 is measured directly by a Sensor 16 inside the filter. According to this invention, an alternative manner of detecting the temperature of the particulate filter 11 is to analyze the temperature of the exhaust gas downstream of the particulate filter 11.

According to the present invention, the oxygen containing gas is provided in pulses. Also, the oxygen containing gas is provided by introducing air via the bypass in the exhaust gas line 18. Furthermore, the oxygen containing gas may be compressed by a compression unit before introduction into the exhaust line.

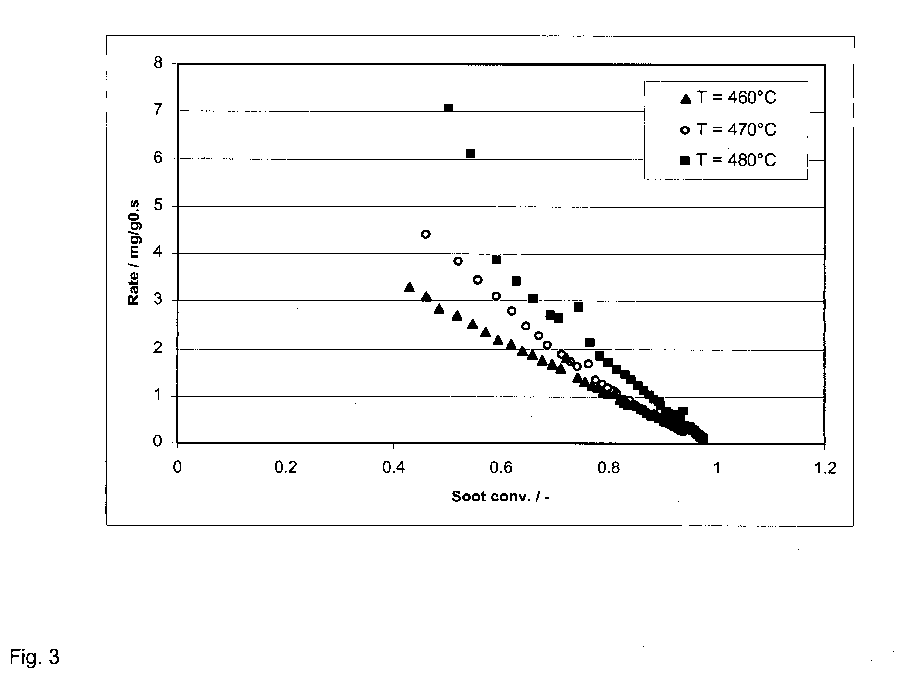

Referring to Fig. 3, a diagram of a typical example of soot oxidation rate vs. soot conversion at different temperatures is shown. Rates increase with increasing temperature.

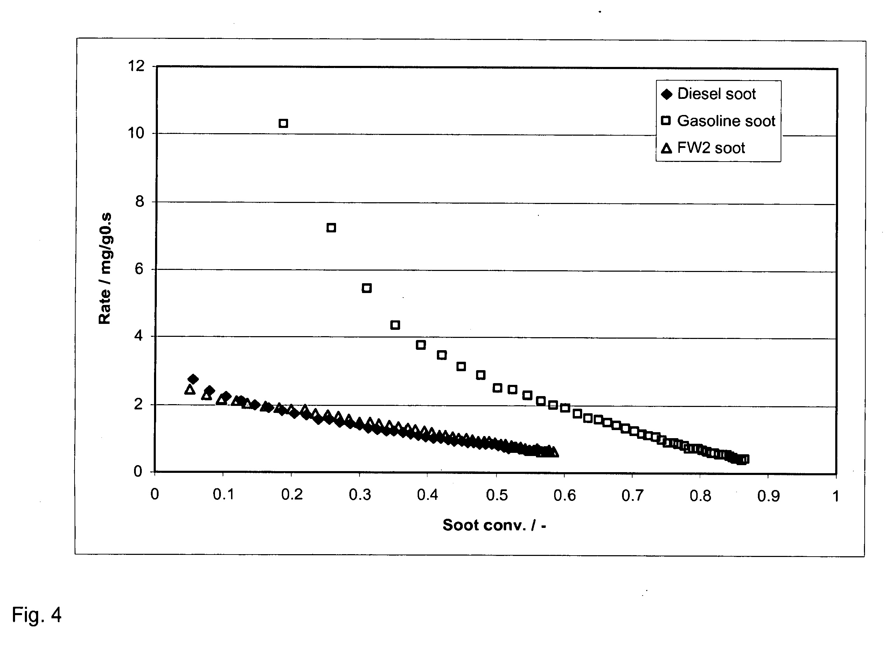

Referring to Fig. 4, a diagram of soot oxidation rates vs. soot conversion for FW2, diesel soot and gasoline soot is shown. FW2 is a type of commercial soot. Rates decrease with decreasing amounts of soot in the filter.

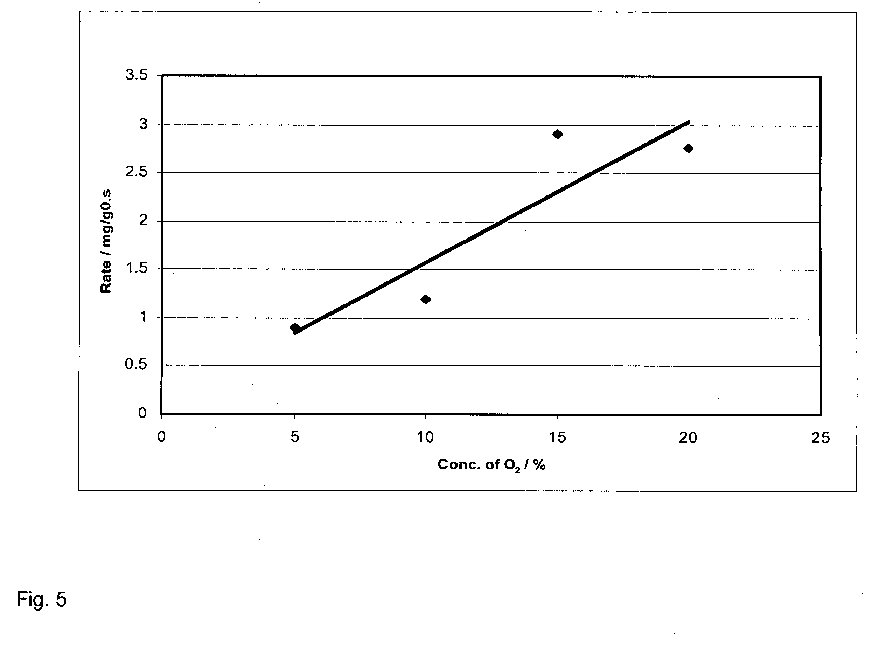

Referring to Fig. 5, a diagram of soot oxidation rates vs. O₂ concentration at Temperature 460 °C and at 50 % soot conversion is shown. With increasing concentration of oxygen the soot oxidation rates increase.

When creating the diagrams, as shown in Figs. 3, 4 and 5, the concentration of O₂ was 2 - 20 vol. %, and H₂O 10 %. Nitrogen was used as a balance. Oxygen was introduced in pulses. The total flows were set to obtain SV 7.5 k h⁻¹. The temperatures of the inlet gases remained constant between 440 to 500 °C for a time period of 4650 s, followed by increasing the temperature up to 800 °C with a temperature ramp of 10 °C/min for burning all remaining soot in the particulate filter.

### LIST OF REFERENCE NUMERALS

- 10: Soot burning method
- 11: Particulate filter
- 12: Engine
- 13: Control unit
- 14: Valve
- 15: Catalytic converter
- 16: Sensors
- 17: Communication line
- 18: Exhaust gas line
- 19: Inlet
- 20: Supply air line
- 21: Outlet
- 22: Regeneration system
- 30: Known oxygen concentration of the inlet gas
- 31: Monitor exhaust gas temperature
- 32: Monitor oxygen level of the exhaust gas
- 33: Monitor temperature of the filter
- 34: Predict amount of the soot load
- 35: Known soot burn rate
- 36: Determine additionally required amount of oxygen containing gas
- 37: Initiation of the soot burn
- 38: Open valve
- 39: Regulate engine operation

## Claims

1. A method (10) of burning soot in an exhaust particulate filter (11) of a combustion engine (12) in order to regenerate the particulate filter (11), in which at least the temperature of the exhaust gas is monitored (31) and in which burning of soot is initiated (37) by introducing additional oxygen into the exhaust gas upstream of the particulate filter (11) when the temperature of the exhaust gas exceeds a given level wherein a soot burn rate is controlled by the amount of additional oxygen that is introduced into the exhaust gas, **characterised in that** the additional oxygen is introduced into the exhaust gas in pulses of controlled frequency and/or controlled length, wherein the additional oxygen is taken from an air inlet (19) of the combustion engine (12) and led to the exhaust gas upstream of the particulate filter (11) by means of a bypass.

2. The method (10) as claimed in claim 1, wherein the burning of soot is initiated by introducing additional oxygen into the exhaust gas upstream of the particulate filter (11) when the temperature of the exhaust gas exceeds 250 °C.

3. The method (10) as claimed in claim 2, wherein the burning of soot is initiated by introducing additional oxygen into the exhaust gas upstream of the particulate filter (11) when the temperature of the exhaust gas exceeds 400 °C

4. The method (10) as claimed in any of the claims 1 to 3, wherein the temperature inside the particulate filter (11) is monitored (31) and introducing additional oxygen into the exhaust gas upstream of the particulate filter (11) is stopped if the temperature inside the filter exceeds a given limit.

5. The method (10) as claimed in claims 4, wherein introducing additional oxygen into the exhaust gas upstream of the particulate filter (11) is stopped if the temperature inside the filter exceeds 900 °C.

6. The method (10) as claimed in claims 5, wherein introducing additional oxygen into the exhaust gas upstream of the particulate filter (11) is stopped if the temperature inside the filter exceeds 800 °C.

7. The method (10) as claimed in claim 1, wherein the amount of additional oxygen that is introduced into the exhaust gas is set by means of a valve (14) located in the bypass.

8. The method (10) as claimed in any of the claims 1 to 7, wherein the additional oxygen is compressed before it is introduced into the exhaust gas.

9. The method (10) as claimed in any of the claims 1 to 8, wherein the amount of additional oxygen that is introduced into the exhaust gas is controlled by an engine control (13) unit of the combustion engine (12).

10. A vehicle including a combustion engine (12) and an aftertreatment system for treating exhaust gases emitted by the combustion engine (12), wherein the aftertreatment system comprises a control unit (13), a particulate filter (11), sensors (16) accommodated at least upstream of and downstream of the particulate filter (11) and a supply air line (20) including a valve (14) for leading oxygen containing gas to the particulate filter (11), **characterised in that** the supply air line (20) is designed as a bypass, wherein the control unit (13) is connected to the engine (12), to the sensors (16) and to the valve (14) and wherein the control unit (13) is adapted to perform the method as claimed in any of the claims 1 to 9.

## Patentansprüche

1. Verfahren (10) zum Verbrennen von Ruß in einem Abgaspartikelfilter (11) einer Brennkraftmaschine (12), um den Partikelfilter (11) zu regenerieren, bei dem mindestens die Temperatur des Abgases überwacht wird (31) und bei dem das Verbrennen von Ruß durch Einleiten von zusätzlichem Sauerstoff in das Abgas vor dem Partikelfilter (11) begonnen wird (37), wenn die Temperatur des Abgases einen vorgegebenen Pegel überschreitet, wobei eine Rußverbrennungsrate durch die Menge an zusätzlichem Sauerstoff gesteuert wird, der in das Abgas eingeleitet wird, **dadurch gekennzeichnet, dass** der zusätzliche Sauerstoff in Impulsen von gesteuerter Frequenz und/oder gesteuerter Länge in das Abgas eingeleitet wird, wobei der zusätzliche Sauerstoff aus einem Lufteinlass (19) der Brennkraftmaschine (12) genommen wird und in den Abgasstrom vor dem Partikelfilter (11) mittels eines Bypasses geleitet wird.

2. Verfahren (10) nach Anspruch 1, wobei das Verbrennen von Ruß durch Einleiten von zusätzlichem Sauerstoff in das Abgas vor dem Partikelfilter (11) begonnen wird, wenn die Temperatur des Abgases 250 °C überschreitet.

3. Verfahren (10) nach Anspruch 2, wobei das Verbrennen von Ruß durch Einleiten von zusätzlichem Sauerstoff in das Abgas vor dem Partikelfilter (11) begonnen wird, wenn die Temperatur des Abgases 400 °C überschreitet.

4. Verfahren (10) nach einem der Ansprüche 1 bis 3, wobei die Temperatur innerhalb des Partikelfilters (11) überwacht wird (31) und das Einleiten von zusätzlichem Sauerstoff in das Abgas vor dem Partikelfilter (11) dann gestoppt wird, wenn die Temperatur innerhalb des Filters eine vorgegebene Grenze überschreitet.

5. Verfahren (10) nach Anspruch 4, wobei das Einleiten von zusätzlichem Sauerstoff in das Abgas vor dem Partikelfilter (11) gestoppt wird, wenn die Temperatur innerhalb des Filters 900 °C überschreitet.

6. Verfahren (10) nach Anspruch 5, wobei das Einleiten von zusätzlichem Sauerstoff in das Abgas vor dem Partikelfilter (11) gestoppt wird, wenn die Temperatur innerhalb des Filters 800 °C überschreitet.

7. Verfahren (10) nach Anspruch 1, wobei die Menge an zusätzlichem Sauerstoff, die in das Abgas eingeleitet wird, mittels eines Ventils (14), das in dem Bypass angeordnet ist, festgelegt wird.

8. Verfahren (10) nach einem der Ansprüche 1 bis 7, wobei der zusätzliche Sauerstoff komprimiert wird, bevor er in das Abgas eingeleitet wird.

9. Verfahren (10) nach einem der Ansprüche 1 bis 8, wobei die Menge an zusätzlichem Sauerstoff, die in das Abgas eingeleitet wird, von einer Kraftmaschinensteuereinheit (13) der Brennkraftmaschine (12) gesteuert wird.

10. Fahrzeug, das eine Brennkraftmaschine (12) und ein Nachbehandlungssystem zum Behandeln von Abgasen, die von der Brennkraftmaschine (12) ausgestoßen werden, umfasst, wobei das Nachbehandlungssystem eine Steuereinheit (13), einen Partikelfilter (11), Sensoren (16), die mindestens dem Partikelfilter (11) vorgeschaltet und nachgeschaltet untergebracht sind, und eine Versorgungsluftleitung (20), die ein Ventil (14) zum Leiten von sauerstoffhaltigem Gas zu dem Partikelfilter (11), **dadurch gekennzeichnet, dass** die Versorgungsluftleitung (20) als Bypass ausgelegt ist, wobei die Steuereinheit (13) mit der Kraftmaschine (12), mit den Sensoren (16) und mit dem Ventil (14) verbunden ist und wobei die Steuereinheit (13) dazu ausgelegt ist, das Verfahren nach einem der Ansprüche 1 bis 9 durchzuführen.

## Revendications

1. Procédé (10) de combustion des suies dans un filtre (11) à particules dans les gaz d'échappement d'un moteur à combustion interne (12) en vue de régénérer le filtre (11) à particules,
dans lequel au moins la température des gaz d'échappement est surveillée (31) et la combustion des suies est lancée (37) en introduisant de l'oxygène supplémentaire dans les gaz d'échappement en amont du filtre (11) à particules lorsque la température des gaz d'échappement dépasse un niveau donné,
le taux de combustion des suies étant contrôlé par la quantité d'oxygène supplémentaire introduite dans les gaz d'échappement,
**caractérisé en ce que**
l'oxygène supplémentaire est introduit dans les gaz d'échappement par impulsions de fréquence contrôlée et/ou de longueur contrôlée et
**en ce que** l'oxygène supplémentaire est pris dans une admission d'air (19) du moteur à combustion interne (12) et introduit dans les gaz d'échappement en amont du filtre (11) à particules au moyen d'une dérivation.

2. Procédé (10) selon la revendication 1, dans lequel la combustion des suies est lancée en introduisant de l'oxygène supplémentaire dans les gaz d'échappement en amont du filtre (11) à particules lorsque la température des gaz d'échappement dépasse 250°C.

3. Procédé (10) selon la revendication 2, dans lequel la combustion des suies est lancée en introduisant de l'oxygène supplémentaire dans les gaz d'échappement en amont du filtre (11) à particules lorsque la température des gaz d'échappement dépasse 400°C.

4. Procédé (10) selon l'une quelconque des revendications 1 à 3, dans lequel la température qui règne à l'intérieur du filtre (11) à particules est surveillée (31) et l'introduction d'oxygène supplémentaire dans les gaz d'échappement en amont du filtre (11) à particules est arrêtée si la température qui règne à l'intérieur du filtre dépasse une limite donnée.

5. Procédé (10) selon la revendication 4, dans lequel l'introduction d'oxygène supplémentaire dans les gaz d'échappement en amont du filtre (11) à particules est arrêtée si la température qui règne à l'intérieur du filtre dépasse 900°C.

6. Procédé (10) selon la revendication 5, dans lequel l'introduction d'oxygène supplémentaire dans les gaz d'échappement en amont du filtre (11) à particules est arrêtée si la température qui règne à l'intérieur du filtre dépasse 800°C.

7. Procédé (10) selon la revendication 1, dans lequel la quantité d'oxygène supplémentaire introduite dans les gaz d'échappement est fixée au moyen d'une soupape (14) située dans la dérivation.

8. Procédé (10) selon l'une quelconque des revendications 1 à 7, dans lequel l'oxygène supplémentaire est comprimé avant d'être introduit dans les gaz d'échappement.

9. Procédé (10) selon l'une quelconque des revendications 1 à 8, dans lequel la quantité d'oxygène supplémentaire introduite dans les gaz d'échappement est contrôlée par une unité de contrôle (13) du moteur à combustion interne (12).

10. Véhicule comprenant un moteur à combustion interne (12) et un système de post-traitement qui traite les gaz d'échappement émis par le moteur à combustion interne (12), le système de post-traitement comprenant une unité de contrôle (13), un filtre (11) à particules, des capteurs (16) logés au moins en amont et en aval du filtre (11) à particules et un conduit (20) d'introduction d'air comprenant une soupape (14) et conduisant un gaz contenant de l'oxygène vers le filtre (11) à particules,
**caractérisé en ce que**
le conduit (20) d'alimentation en air est conçu comme dérivation,
**en ce que** l'unité de contrôle (13) est raccordée au moteur (12), aux capteurs (16) et à la soupape (14) et **en ce que** l'unité de contrôle (13) est adaptée pour mettre en oeuvre le procédé selon l'une quelconque des revendications 1 à 9.
